# EUROPEAN PATENT APPLICATION

(11) **EP 3 628 445 A1**
(43) Date of publication of application: **01.04.2020**
(21) Application number: 18214654.8
(22) Date of filing: 20.12.2018
(51) Int. Cl.: B25B 27/00, B21J 15/16

(54) **FLEXIBLE FRICTION DRIVING DEVICE**

(30) Priority: 30.09.2018 CN 201811163200
(71) Applicant: Shanghai Anzi Industrial Co., Ltd, Qingpu District Shanghai 201703 (CN); Shanghai Well-Done Machinery Manufacturing Co., Ltd., Shanghai 200949 (CN)
(72) Inventor: WU, Mingxiang, Shanghai, 200949 (CN)
(74) Representative: Lermer, Christoph

(57) **Abstract**

The present invention discloses a flexible friction driving device, comprising a driving gear, a driven gear, a hexagonal sleeve, a damping ring, an elastic ring and two bearing seats, wherein the driving gear is mounted below the driven gear and engaged with the driven gear; the hexagonal sleeve is disposed between the two bearing seats, and the damping ring and the driven gear are successively sheathed on the hexagonal sleeve; a gland and the elastic ring are placed in a hole at one end of the driven gear; the elastic ring compresses the damping ring onto a cylindrical outer surface of the hexagonal sleeve; power from a motor is transferred to the driven gear by the driving gear; and, the power is flexibly transferred to the hexagonal sleeve by the friction of the inner holes of the damping ring and the driven gear against the cylindrical outer surface of the hexagonal sleeve. The present invention has the advantages that the torque is flexible during the screwing-in of a rivet nut, the structure is simple and reliable, and no adjustment is required, so the present invention is suitable for various electrically-driven nut riveting tools and has a promising application prospect.

## Description

### Technical Field of the Invention

The present invention relates to an electrically-driven quick riveting tool, and in particular to a flexible friction driving device and an electrically-driven nut riveting tool using the same.

### Background of the Invention

For an electrically-driven nut riveting tool, the power for pull-riveting a rivet nut and the power for loading and unloading the rivet nut are usually provided by a same motor through a clutch. However, the existing clutches are complex in structure, tedious in adjustment, poor in reliability and easy to damage. Those defects need to be improved in the present application.

### Summary of the Invention

A technical problem to be solved by the present invention is to provide a flexible friction driving device and an electrically-driven nut riveting tool using the same, which are simple in structure and free of adjustment.

To solve the above technical problem, the present invention provides a flexible friction driving device, including a driving gear, a driven gear, a hexagonal sleeve, a damping ring, an elastic ring and two bearing seats, wherein the driving gear is mounted below the driven gear and engaged with the driven gear; the hexagonal sleeve is disposed between the two bearing seats, and the damping ring and the driven gear are successively sheathed on the hexagonal sleeve; a gland and the elastic ring are placed in a hole at one end of the driven gear; the elastic ring compresses the damping ring onto a cylindrical outer surface of the hexagonal sleeve; power from a motor is transferred to the driven gear by the driving gear; and, the power is flexibly transferred to the hexagonal sleeve by the friction of the inner holes of the damping ring and the driven gear against the cylindrical outer surface of the hexagonal sleeve.

An inner hole is formed on the hexagonal sleeve, and torque is transferred by the inner hole together with an outer hexagon at one end of a connecting rod.

The present invention further provides an electrically-driven nut riveting tool with a flexible friction driving device, wherein the flexible friction driving device includes a driving gear, a driven gear, a hexagonal sleeve, a damping ring, an elastic ring and two bearing seats; the driving gear is mounted below the driven gear and engaged with the driven gear; the hexagonal sleeve is disposed between the two bearing seats, and the damping ring and the driven gear are successively sheathed on the hexagonal sleeve; a gland and the elastic ring are placed in a hole at one end of the driven gear; the elastic ring compresses the damping ring onto a cylindrical outer surface of the hexagonal sleeve; power from a motor is transferred to the driven gear by the driving gear; and, the power is flexibly transferred to the hexagonal sleeve by the friction of the inner holes of the damping ring and the driven gear against the cylindrical outer surface of the hexagonal sleeve.

An inner hole is formed on the hexagonal sleeve, torque is transferred by the inner hole together with an outer hexagon at one end of a connecting rod, and the other end of the connecting rod is connected to a pull-out screw, so that the hexagonal sleeve transfers torque to the pull-out screw.

The present invention has the following advantages.
1) In the present invention, the torque is flexible during the screwing-in of a rivet nut, and no harm will be caused to operators.
2) Since the clutch having a complex structure is omitted, so the present invention is simple and reliable in structure, free of adjustment and suitable for various electrically-driven nut riveting tools, and thus has a promising application prospect.

### Brief Description of the Drawings

The accompanying drawings constituting a part of the present application are used for providing further understanding of the present invention. Illustrative embodiments of the present invention and descriptions thereof are used for explaining the present invention, rather than constituting any inappropriate limitations to the present invention. In the drawings:

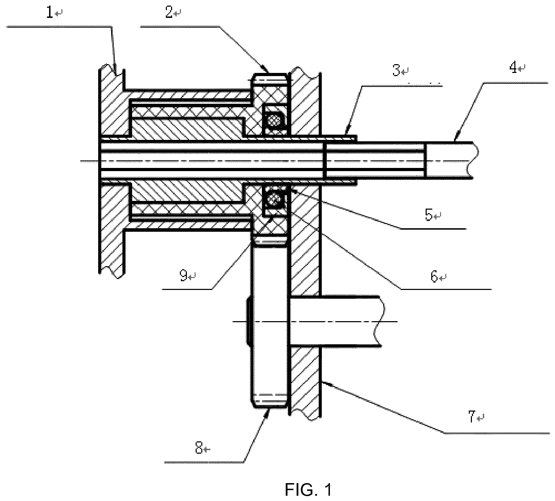

Fig. 1 is a schematic structure diagram of a flexible friction driving device according to the present invention,
   in which:
   1: bearing seat A;
   2: driven gear;
   3: hexagonal sleeve;
   4: connecting rod;
   5: damping ring;
   6: O-shaped rubber ring;
   7: bearing seat B;
   8: driving gear; and
   9: gland.

### Detailed Description of the Invention

The embodiments of the present invention will be described below in detail with reference to the accompanying drawings.

As shown in Fig. 1, the present invention provides a flexible friction driving device, including a driving gear 8, a driven gear 2, a hexagonal sleeve 3, a damping ring 5, an O-shaped rubber ring 6, a bearing seat A 1 and a bearing seat B 7. The driving gear 8 is mounted below the driven gear 2 and engaged with the driven gear 2. The hexagonal sleeve 3 is disposed between the bearing seat A 1 and the bearing seat B 7. The damping ring 5 and the driven gear 2 are successively sheathed on the hexagonal sleeve 3. A gland 9 and the O-shaped rubber ring 6 are placed in a hole at one end of the driven hole 2. The O-shaped rubber ring 6 compresses the damping ring 5 onto a cylindrical outer surface of the hexagonal sleeve 3. Power from a motor is transferred to the driven gear 2 by the driving gear 8, and the power is then flexibly transferred to the hexagonal sleeve 3 by the friction of the inner holes of the damping ring 5 and the driven gear 2 against the cylindrical outer surface of the hexagonal sleeve 3, so that the hexagonal sleeve 3 is driven to rotate with the driven gear 2.

An inner hole is formed on the hexagonal sleeve 3, and torque is transferred by the inner hole together with an outer hexagon at one end of a connecting rod 4.

The present invention further provides an electrically-driven rivet nut tool with a flexible friction driving device. The flexible friction driving device includes a driving gear 8, a driven gear 2, a hexagonal sleeve 3, a damping ring 5, an O-shaped rubber ring 6, a bearing seat A 1 and a bearing seat B 7. The driving gear 8 is mounted below the driven gear 2 and engaged with the driven gear. The hexagonal sleeve 3 is disposed between the bearing seat A 1 and the bearing seat B 7. The damping ring 5 and the driven gear 2 are successively sheathed on the hexagonal sleeve 3. A gland 9 and the O-shaped rubber ring 6 are placed in a hole at one end of the driven hole 2. The O-shaped rubber ring 6 compresses the damping ring 5 onto a cylindrical outer surface of the hexagonal sleeve 3. Power from a motor is transferred to the driven gear 2 by the driving gear 8, and the power is then flexibly transferred to the hexagonal sleeve 3 by the friction of the inner holes of the damping ring 5 and the driven gear 2 against the cylindrical outer surface of the hexagonal sleeve 3, so that the hexagonal sleeve 3 is driven to rotate with the driven gear 2.

An inner hole is formed on the hexagonal sleeve 3, torque is transferred by the inner hole together with an outer hexagon at one end of a connecting rod 4, and the other end of the connecting rod 4 is connected to a pull-out screw, so that the hexagonal sleeve 3 transfers torque to the pull-out screw.

When the reverse moment externally applied to the connecting rod 4 is greater than the friction moment applied to the cylindrical outer surface of the hexagonal sleeve 3 by the inner holes of the damping ring 5 and the driven gear 2, both the damping ring 5 and the driven gear 2 slide relative to the hexagonal sleeve 3, and the hexagonal sleeve 3 stops rotating with the driven gear 2 to avoid generating a too large load on the motor.

When the moment generated when an operator holds the electrically-driven rivet nut is greater than the friction moment applied to the cylindrical outer surface of the hexagonal sleeve 3 by the inner holes of the damping ring 5 and the driven gear 2, the hexagonal sleeve 3 stops rotating with the driven gear 2 to avoid harming the operator.

The foregoing description merely shows preferred embodiments of the present invention and is not intended to limit the present invention. Various modifications and variations can be made to the present invention by a person of ordinary skill in the art. Any modifications, equivalent replacements and improvements made without departing from the spirit and principle of the present invention shall fall into the protection scope of the present invention.

## Claims

1. A flexible friction driving device, comprising a driving gear, a driven gear, a hexagonal sleeve, a damping ring, an elastic ring and two bearing seats, **characterized in that** the driving gear is mounted below the driven gear and engaged with the driven gear; the hexagonal sleeve is disposed between the two bearing seats, and the damping ring and the driven gear are successively sheathed on the hexagonal sleeve; a gland and the elastic ring are placed in a hole at one end of the driven gear; the elastic ring compresses the damping ring onto a cylindrical outer surface of the hexagonal sleeve; power from a motor is transferred to the driven gear by the driving gear; and, the power is flexibly transferred to the hexagonal sleeve by the friction of the inner holes of the damping ring and the driven gear against the cylindrical outer surface of the hexagonal sleeve.

2. The flexible friction driving device according to claim 1, **characterized in that** an inner hole is formed on the hexagonal sleeve, and torque is transferred by the inner hole together with an outer hexagon at one end of a connecting rod.

3. An electrically-driven nut riveting tool with the flexible friction driving device according to claim 1, **characterized in that** the flexible friction driving device comprises a driving gear, a driven gear, a hexagonal sleeve, a damping ring, an elastic ring and two bearing seats; the driving gear is mounted below the driven gear and engaged with the driven gear; the hexagonal sleeve is disposed between the two bearing seats, and the damping ring and the driven gear are successively sheathed on the hexagonal sleeve; a gland and the elastic ring are placed in a hole at one end of the driven gear; the elastic ring compresses the damping ring onto a cylindrical outer surface of the hexagonal sleeve; power from a motor is transferred to the driven gear by the driving gear; and, the power is flexibly transferred to the hexagonal sleeve by the friction of the inner holes of the damping ring and the driven gear against the cylindrical outer surface of the hexagonal sleeve.

4. The electrically-driven nut riveting tool with a flexible friction driving device according to claim 3, **characterized in that** an inner hole is formed on the hexagonal sleeve, torque is transferred by the inner hole together with an outer hexagon at one end of a connecting rod, and the other end of the connecting rod is connected to a pull-out screw, so that the hexagonal sleeve transfers torque to the pull-out screw.
